# EUROPÄISCHE PATENTSCHRIFT

(11) **EP 3 039 170 B1**
(45) Veröffentlichungstag und Bekanntmachung des Hinweises auf die Patenterteilung: **02.12.2020**
(21) Anmeldenummer: 14755972.8
(22) Anmeldetag: 25.07.2014
(51) Int. Cl.: C23F 13/02, C23F 13/06, F16C 19/52

(54) **VERFAHREN ZUM BETRIEB EINER LAGERANORDNUNG**
METHOD FOR OPERATING A BEARING ARRANGEMENT
PROCÉDÉ POUR FAIRE FONCTIONNER UN ENSEMBLE DE PALIERS

(30) Priorität: 27.08.2013 DE 102013216995
(43) Veröffentlichungstag der Anmeldung: 06.07.2016
(73) Patentinhaber: Schaeffler Technologies GmbH & Co. KG, 91074 Herzogenaurach (DE)
(72) Erfinder: GOSS, Matthias, 91325 Adelsdorf (DE); HOLWEGER, Walter, 78736 Epfendorf (DE); WOLF, Marcus, 91097 Oberreichenbach (DE); BLASS, Toni, 97493 Bergrheinfeld (DE); KAUP, Holger, 91056 Erlangen (DE); LOOS, Jörg, 91074 Herzogenaurach (DE)
(86) Internationale Anmeldenummer: PCT/DE2014/200352
(87) Internationale Veröffentlichungsnummer: WO 2015/028010

(56) Entgegenhaltungen:
- WO-A1-95/06761
- DE-A1-102011 017 776
- FR-A- 1 047 000
- GB-A- 1 123 595
- US-A1- 2011 188 794
- MISCHLER S: "Triboelectrochemical techniques and interpretation methods intribocorrosion: A comparative evaluation", TRIBOLOGY INTERNATIONAL, BUTTERWORTH SCIENTIFIC LDT, GUILDFORD, GB, Bd. 41, Nr. 7, 1. Januar 2008 (2008-01-01) , Seiten 573-583, XP002640918, ISSN: 0301-679X, DOI: 10.1016/J.TRIBOINT.2007.11.003 [gefunden am 2007-12-21]

## Beschreibung

### Gebiet der Erfindung

Die Erfindung betrifft ein Verfahren zum Betrieb einer mindestens ein Wälzlager umfassenden Lageranordnung, wobei an mindestens ein Lagerteil des Wälzlagers, insbesondere an einem Lagerring, eine elektrische Spannung angelegt wird.

### Hintergrund der Erfindung

Aus der DE 10 2011 017 776 A1 ist ein Lager mit korrosionsgeschütztem Lagerteil bekannt, wobei der Korrosionsschutz mit Hilfe einer Fremdstromquelle erzielt wird. Hierbei ist ein Lagerteil, nämlich ein Lagerring eines Wälzlagers, als Kathode der Fremdstromquelle geschaltet. Die zugehörige Anode ist dem Lagerring gegenüberliegend angeordnet und kann als Ringanode ausgebildet sein.

US 2011/188794 beschreibt eine Vorrichtung, bei der ein Lagerteil eines Wälzlagers eine Fremdstromanode ist.

### Aufgabe der Erfindung

Der Erfindung liegt die Aufgabe zugrunde, eine mit einer Stromquelle arbeitende Korrosionsschutzvorrichtung für ein Wälzlager gegenüber dem genannten Stand der Technik weiterzuentwickeln.

### Beschreibung der Erfindung

Diese Aufgabe wird erfindungsgemäß gelöst durch ein Verfahren zum Betrieb einer mindestens ein Wälzlager umfassenden Lageranordnung mit den Merkmalen des Anspruchs 1.

Nach dem erfindungsgemäßen Verfahren wird an ein zu schützendes Lagerteil des Wälzlagers ein positives elektrisches Potential gelegt, während ein weiteres Teil der Lageranordnung als Kathode geschaltet wird. Der zwischen dem Lagerteil und der Kathode fließende Strom wird durch eine Regelung begrenzt. Die maximale Stromdichte liegt bei höchstens 0,13 MA/m², bezogen auf die Hertz'sche Pressungsfläche.

Die Erfindung geht von der Überlegung aus, dass verschiedenartige Korrosionsmechanismen zu Schäden an Wälzlagern führen können. Eine bewährte Methode zur Vermeidung von Korrosion an metallischen Maschinenteilen stellt der kathodische Korrosionsschutz dar. Hierbei wird ein vor Korrosion zu schützendes Teil, im Fall der genannten DE 10 2011 017 776 A1 ein Wälzlagerring, als Kathode geschaltet. Die zugehörige Anode wird allgemein auch als Opferanode bezeichnet und hat lediglich eine Funktion innerhalb der Korrosionsschutzvorrichtung, jedoch keinerlei mechanische Funktion.

In Abkehr von herkömmlichen, kathodischen Korrosionsschutzsystemen wird gemäß der Erfindung an ein mechanisch beanspruchtes Wälzlagerteil ein positives elektrisches Potenzial gelegt und damit das Wälzlagerteil als Anode geschaltet. Überraschenderweise stellt dies eine wirksame Maßnahme gegen weiß anätzende Risse (WEC=White Etching Cracks) sowie weiß anätzende Zonen (WEA=White Etching Areas) dar. Zum Hintergrund betreffend WEC und WEA bei Wälzlagern wird auf die DE 10 2007 055 575 A1 verwiesen. Nach diesem Dokument soll der Gefahr von weiß anätzenden Rissen in Wälzlagerteilen durch die gezielte Erzeugung von Druckeigenspannungen in einem Laufbahnelement einer Wälzlagerung begegnet werden.

Der mit der Erfindung verfolgte Ansatz, nämlich die Schaltung eines mechanischen Funktionsteils als Anode einer Korrosionsschutzvorrichtung, mag bei vordergründiger Betrachtung kontraproduktiv erscheinen, da Materialabtrag an dem mechanisch beanspruchten Wälzlagerteil, insbesondere Lagerring, durch dessen Anschluss an ein positives elektrisches Potenzial theoretisch gefördert wird. Unter realen Einsatzbedingungen eines Wälzlagers bei Öl- oder Fettschmierung ist dieser Effekt jedoch vernachlässigbar. Eine wesentlich höhere Relevanz hat der als WEC bekannte Schadensmechanismus, der in dem genannten Dokument DE 10 2007 055 575 A1 auch als Korrosionswälzermüdung interpretiert wird. Nach gängigen Theorien spielt bei dem WEC-Schadensmechanismus Wasserstoff eine Rolle. Das gemäß der Erfindung positive elektrische Potenzial des zu schützenden Wälzlagerteils sorgt dafür, dass Protonen von WEC-gefährdeten Bereichen des Wälzlagerteils ferngehalten werden. Dieser positive Effekt, welcher WEC-Schäden effektiv entgegenwirkt, überwiegt theoretisch denkbare negative Effekte, was Oberflächenkorrosion durch die Schaltung des Wälzlagerteils als Anode betrifft, bei weitem.

Ein weiterer, für die Wirksamkeit des erfindungsgemäßen Verfahrens bedeutender Effekt liegt in einer Oxidation, die durch das an das geschützte Lagerteil angelegte Potential bewirkt wird. Durch diese Oxidation entstehen Metalloxide, wie sie auch bei einer Brünierung gebildet werden. Im Gegensatz zu einer Brünierung werden die gebildeten Oxide, welche beim Betrieb des Wälzlagers wieder von der Werkstückoberfläche abgetragen werden, jedoch permanent nachgebildet. Anders als eine Brünierung, welche aufgrund von Verschleiß nur eine zeitlich begrenzte Schutzwirkung hat, ist durch die Schaltung des zu schützenden Lagerteils als Anode somit ein dauerhafter Schutz gegeben.

Um jegliche Schäden durch elektrische Ströme, die durch Lagerkomponenten, nämlich Lagerringe und Wälzkörper, fließen, auszuschließen, wird der durch das geschützte Wälzlagerteil fließende Strom auf einen hinreichen niedrigen Wert begrenzt, insbesondere geregelt. Eine regelungstechnisch eingestellte oder auf elektrotechnisch einfachere Weise begrenzte Stromstärke kann dabei je nach Lagertyp beispielsweise in einem Bereich zwischen 200 Mikroampere und 300 Mikroampere oder in einem Bereich zwischen 20 Mikroampere und höchstens 25 Mikroampere liegen.

Unabhängig von der Lagergröße wird der durch das zu schützende Lagerteil fließende Strom derart geregelt, dass er in einem Intervall liegt, in dem eine Spannungs-Strom-Kennlinie ein lokales Spannungs-Maximum als maximalen Wert innerhalb des gesamten Intervalls aufweist. Hierbei wird die Erkenntnis ausgenutzt, dass im Bereich sehr geringer Ströme, die durch das Wälzlager fließen, ein Stromanstieg zunächst mit einem relativ starken Spannungsanstieg korrespondiert. Hierbei ist ein annähernd linearer Zusammenhang solange gegeben, bis ein lokales Spannungs-Maximum erreicht ist. Im Bereich dieses lokalen Maximums treten Stromdurchschläge auf, die sich bei höheren Stromstärken häufen. Durch die Häufung der Stromdurchschläge nimmt in einem begrenzten Bereich die anliegende Spannung bei steigender Stromstärke ab. Die Stromstärke, bei welcher die Lageranordnung betrieben wird, liegt bei mindestens 20% und höchstens 400% derjenigen Stromstärke, bei der das lokale Spannungsmaximum liegt.

Als Kathode des erfindungsgemäßen Korrosionsschutzsystems kann ein elektrisch leitfähiges Teil verwendet werden, welches entweder mechanisch nicht beansprucht wird oder ein mechanisch belastetes Wälzlagerteil, insbesondere ein Lagerring, ist. Im letztgenannten Fall kann es sich bei dem als Kathode geschalteten Lagerteil entweder um eine Komponente desselben Wälzlagers, welches auch das als Anode geschaltete Lagerteil aufweist, oder um eine Komponente eines weiteren Wälzlagers handeln. In beiden Fällen wird als Kathode vorzugsweise ein Teil verwendet, welches aus einem anderen Werkstoff, nämlich einem weniger WEC-gefährdeten Werkstoff, als das als Anode geschaltete, korrosionsgefährdete, insbesondere WEC-gefährdete, Wälzlagerteil gefertigt ist.

Gemäß einer alternativen Ausgestaltung sind mehrere Lagerringe desselben Wälzlagers an dasselbe positive Potenzial gelegt, womit sie gemeinsam als Anode innerhalb des Korrosionsschutzsystems fungieren. Die zugehörige Kathode ist gemäß dieser Gestaltung vorzugsweise kein Wälzlagerteil.

Das mit dem erfindungsgemäßen Verfahren geschützte Wälzlagerteil kann Teil eines Rotativlagers oder Teil eines Linearlagers sein. Ebenso sind Kombinationen aus Rotativ- und Linearlagerungen für die Anwendung des Verfahrens geeignet. Das Verfahren ist beispielsweise in den Bereichen Windkraft, Stahlindustrie, Papierindustrie, Fahrzeugbau, Textilindustrie, sowie Haushaltsmaschinen einsetzbar. Im Einzelnen kann es sich bei den korrosionsgeschützten Komponenten von Wälzlagern beispielsweise um Komponenten von Getriebelagern oder Generatorlagern handeln.

Nachfolgend wird ein Ausführungsbeispiel der Erfindung anhand einer Zeichnung näher erläutert. Hierin zeigt:

### Kurze Beschreibung der Zeichnung

- Fig. 1: in einer vereinfachten Schnittdarstellung eine Lageranordnung mit elektrischem Korrosionsschutzsystem.
- Fig. 2: in einem Diagramm den Zusammenhang zwischen dem durch die Lageranordnung nach Fig. 1 fließenden elektrischen Strom und der anliegenden Spannung.

### Ausführliche Beschreibung der Zeichnung

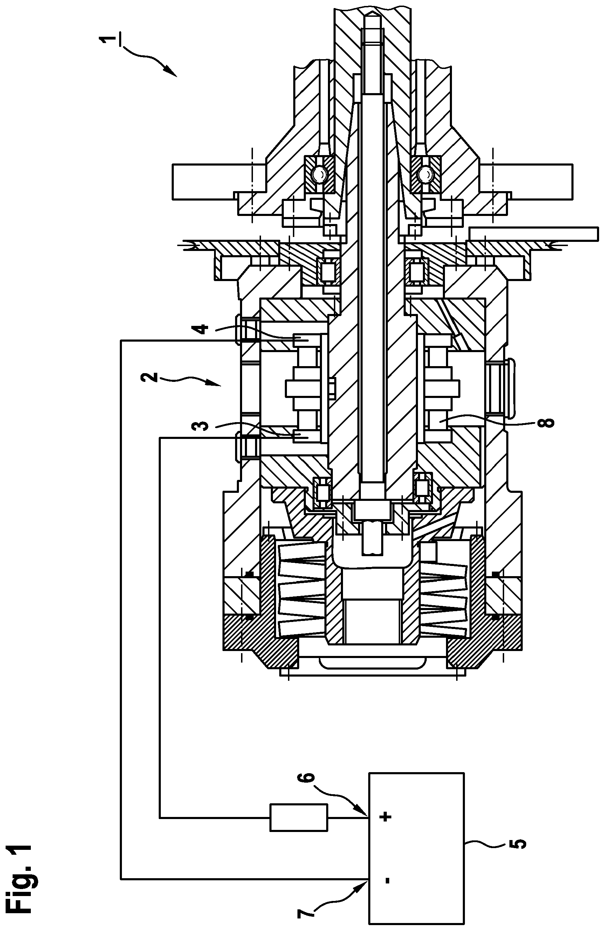

Bei der in Figur 1 dargestellten, insgesamt mit dem Bezugszeichen 1 gekennzeichneten Lageranordnung handelt es sich um einen Wälzlagerprüfstand FE8 gemäß DIN 51819, welcher ursprünglich für die Prüfung von Schmierstoffen konzipiert wurde. Die Funktionsfähigkeit des erfindungsgemäßen Korrosionsschutzsystems wurde mit auf diesem Prüfstand durchgeführten Versuchen nachgewiesen. Im kommerziellen Einsatz des Korrosionsschutzsystems kann es sich bei der Lageranordnung 1 beispielsweise um eine Hauptwellenlagerung, eine Getriebelagerung, oder eine Generatorlagerung einer Windkraftanlage handeln.

Im vorliegenden Fall ist ein Wälzlager 2 der Lageranordnung 1 als Axiallageranordnung ausgebildet. Das Wälzlager 2 weist zwei Lagerteile 3,4, nämlich Lagerscheiben, auf, von welchem die Lagerscheibe 3 als Anode und die Lagerscheibe 4 als Kathode des Korrosionsschutzsystems geschaltet ist. Zentrale elektrotechnische Komponente des Korrosionsschutzsystems ist eine Stromversorgungs- und Regeleinheit 5, welche Anschlüsse 6,7 aufweist, an die die als Anode geschaltete Lagerscheibe 3 beziehungsweise die als Kathode geschaltete Lagerscheibe 4 angeschlossen sind. Während die Lagerscheibe 4 des Wälzlagers 2 auf Masse gelegt ist, ist die Lagerscheibe 3 auf ein positives elektrisches Potenzial von etwa 5 Volt gelegt. Die genaue Höhe des positiven elektrischen Potenzials ist jedoch für das Korrosionsschutzverfahren nicht entscheidend.

Von zentraler Bedeutung ist dagegen der Strom, welcher zwischen den als Elektroden fungierenden Lagerteilen 3,4 fließt und durch die Stromversorgungs- und Regeleinheit 5 auf einen zumindest annähernd konstanten Wert geregelt wird. Dieser Wert liegt bei der Anordnung nach Fig. 1 zwischen 200 Mikroampere und 250 Mikroampere und ist damit sowohl groß genug, dass Korrosionsschäden, insbesondere WEC-Schäden, an der Lagerscheibe 3 verhindert werden, als auch gering genug, um durch elektrische Ströme verursachte Schäden an Komponenten des Wälzlagers 2, auch Wälzkörpern 8, zuverlässig auszuschließen.

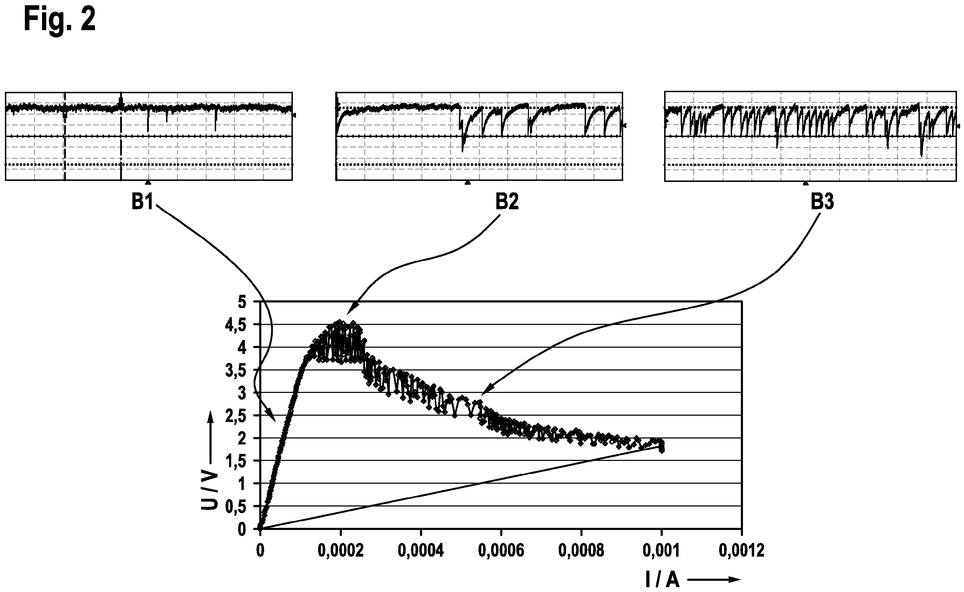

Hinsichtlich des Zusammenhangs zwischen dem durch die Lageranordnung 1 fließenden Strom und der zwischen den Anschlüssen 6,7 anliegenden Spannung wird im Folgenden auf Fig. 2 verwiesen.

Das Diagramm in Fig. 2 zeigt eine Spannungs-Strom-Kennlinie, an der drei Betriebspunkte B1,B2,B3 markiert sind, wobei für jeden Betriebspunkt B1,B2,B3 der mit einem Oszilloskop gemessene genaue Spannungsverlauf exemplarisch in jeweils einem gesonderten kleineren Diagramm dargestellt ist. Die in der Kennlinie in Abhängigkeit vom Strom I (in Ampere) aufgetragene Spannung U (in Volt) ist dagegen als Effektivwert zu verstehen.

Der Betriebspunkt B1 liegt in einem Bereich der Kennlinie, in welchem ein annähernd linearer Zusammenhang zwischen der Zunahme des Stroms I und der Zunahme der effektiven Spannung U beobachtbar ist. Im zeitlichen Verlauf weist die Spannung keine stärkeren Schwankungen auf.

Der zweite Betriebspunkt B2 entspricht einem lokalen Maximum der Spannungs-Strom-Kennlinie. Der zugehörige zeitlich aufgelöste Spannungsverlauf zeigt, dass an diesem Betriebspunkt B2 gelegentliche Spannungseinbrüche auftreten. Jeder Spannungseinbruch entspricht einem Stromdurchbruch, wobei sich die Spannung anschließend wieder aufbaut. Am Betriebspunkt B3 schließlich treten laufend Spannungseinbrüche auf, was eine niedrigere effektive Spannung im Vergleich zum Betriebspunkt B2 bei gleichzeitig höherem Stromfluss bedeutet.

Die Lageranordnung 1 wird vorzugsweise im zweiten Betriebspunkt B2 betrieben, bei welchem die Stromstärke I etwa 200 µA beträgt. Abweichend hiervon sind auch Stromstärken geeignet, welche unter oder über diesem Wert liegen, solange die Spannung U um nicht mehr als 50% gegenüber dem Wert, der am lokalen Maximum, das heißt am Betriebspunkt B2, vorliegt, abgesenkt ist. Insbesondere ist diese Bedingung an den Betriebspunkten B1 und B3 erfüllt.

Das als Kathode geschaltete Lagerteil 4, das heißt die mit dem negativen Anschluss 7 der Stromversorgungs- und Regeleinheit 5 verbundene Lagerscheibe 4, ist aus einem Werkstoff gefertigt, welcher sich vom Werkstoff des mittels der Stromversorgungs- und Regeleinheit 5 korrosionsgeschützten Lagerteils 3 unterscheidet. Abweichend von der Anordnung nach Figur 1 kann es sich bei dem als Kathode geschalteten Lagerteil 4 auch um ein mechanisch unbelastetes oder nur gering belastetes Teil, beispielsweise Gehäuseteil, der Lageranordnung 1 handeln. Eine weitere Verfahrensvariante sieht vor, dass beide Lagerteile 3,4 des Wälzlagers 2 gemeinsam auf dasselbe positive elektrische Potenzial gelegt sind, während ein weiteres Teil, insbesondere Gehäuseteil, der Lageranordnung 1 mit dem Anschluss 7, das heißt mit Masse, verbunden ist.

Unabhängig vom Anwendungsgebiet der Lageranordnung 1 ist das Wälzlager 2 entweder mit Öl oder mit Fett, in jedem Fall mit einem elektrisch nicht oder nur minimal leitfähigen Stoff, geschmiert. In besonders vorteilhafter Verfahrensführung werden Änderungen der Schmierungsverhältnisse durch die Stromversorgungs- und Regeleinheit 5 aufgrund eines geänderten elektrischen Widerstandes zwischen den Lagerteilen 3,4 detektiert.

### Bezugszahlenliste

- 1: Lageranordnung
- 2: Wälzlager
- 3: Lagerteil
- 4: Lagerteil
- 5: Stromversorgungs- und Regeleinheit
- 6: Anschluss
- 7: Anschluss
- 8: Wälzkörper

- B1,B2,B3: Betriebspunkte
- I: Stromstärke
- U: Spannung

## Patentansprüche

1. Verfahren zum Betrieb einer mindestens ein Wälzlager (2) umfassenden Lageranordnung (1), mit folgenden Merkmalen:
- An ein Lagerteil (3) des Wälzlagers (2) wird ein positives elektrisches Potential gelegt,
- ein weiteres Teil (4) der Lageranordnung (1) wird als Kathode geschaltet,
- der zwischen dem Lagerteil (3) und der Kathode (4) fließende Strom wird auf einen Wert geregelt, welcher in einem Intervall liegt, in dem eine Spannungs-Strom-Kennlinie ein lokales Spannungs-Maximum als maximalen Wert innerhalb des gesamten Intervalls aufweist, wobei der durch das Lagerteil (3) fließende Strom eine maximale Dichte von 0,13 MA/m², bezogen auf die Hertz'sche Pressungsfläche, aufweist und die Lageranordnung (1) bei einer Stromstärke betrieben wird, welche mindestens 20% und höchstens 400% derjenigen Stromstärke beträgt, bei der das lokale Spannungsmaximum liegt.

2. Verfahren nach Anspruch 1, **dadurch gekennzeichnet, dass** das weitere Teil (4) ein Wälzlagerteil, nämlich ein Lagerring, ist, welches aus einem anderen Werkstoff als das mit dem positiven Potential beaufschlagte Lagerteil (3) gefertigt ist.

3. Verfahren nach Anspruch 1 oder 2, **dadurch gekennzeichnet, dass** an mehrere Lagerteile (3) des Wälzlagers (2) dasselbe positive elektrische Potential gelegt wird.

4. Verfahren nach einem der Ansprüche 1 bis 3, **dadurch gekennzeichnet, dass** als Wälzlager (2) ein Rotativlager ausgewählt wird.

5. Verfahren nach einem der Ansprüche 1 bis 3, **dadurch gekennzeichnet, dass** als Wälzlager (2) ein Linearlager ausgewählt wird.

6. Verfahren nach einem der Ansprüche 1 bis 5, **dadurch gekennzeichnet, dass** das Wälzlager (2) mit Öl geschmiert wird.

7. Verfahren nach einem der Ansprüche 1 bis 5, **dadurch gekennzeichnet, dass** das Wälzlager (2) mit Fett geschmiert wird.

## Claims

1. A method for operating a bearing arrangement (1) comprising at least one rolling bearing (2), having the following features:
- a positive electrical potential is applied to a bearing part (3) of the rolling bearing (2),
- a further part (4) of the bearing arrangement (1) is switched as a cathode,
- the current flowing between the bearing part (3) and the cathode (4) is regulated to a value which lies in a range in which a voltage-current characteristic curve has a local voltage maximum as the maximum value within the entire range, wherein the current flowing through the bearing part (3) has a maximum density of 0.13 MA/m², in relation to the Hertzian pressure area, and the bearing arrangement (1) is operated at a current which is at least 20% and at most 400% of the current at which the local voltage maximum is.

2. The method according to claim 1, **characterised in that** the further part (4) is a rolling bearing part, namely a bearing ring, which is made of a different material than the bearing part (3) to which the positive potential is applied.

3. The method according to claim 1 or 2, **characterised in that** the same positive electrical potential is applied to a plurality of bearing parts (3) of the rolling bearing (2).

4. The method according to any one of claims 1 to 3, **characterised in that** a rotary bearing is selected as the rolling bearing (2).

5. The method according to any one of claims 1 to 3, **characterised in that** a linear bearing is selected as the rolling bearing (2).

6. The method according to any one of claims 1 to 5, **characterised in that** the rolling bearing (2) is lubricated with oil.

7. The method according to any one of claims 1 to 5, **characterised in that** the rolling bearing (2) is lubricated with grease.

## Revendications

1. Procédé pour faire fonctionner un ensemble de paliers (1) comprenant au moins un palier à rouleaux (2), présentant les caractéristiques suivantes :
- un potentiel électrique positif est appliqué à une partie (3) du palier à rouleaux (2),
- une autre partie (4) de l'ensemble de paliers (1) est montée en tant que cathode,
- le courant circulant entre la partie (3) et la cathode (4) est réglé à une valeur qui se situe dans un intervalle dans lequel une courbe caractéristique tension-courant a un maximum de tension locale comme valeur maximum dans l'intervalle entier, dans lequel le courant traversant la partie (3) a une densité maximale de 0,13 MA/m², sur base de la zone de pression hertzienne, et l'ensemble de paliers (1) fonctionne à un courant qui s'élève à au moins 20 % et au plus 400 % du courant auquel se situe le maximum de tension locale.

2. Procédé selon la revendication 1, **caractérisé en ce que** l'autre partie (4) est une partie du palier à rouleaux, à savoir une bague de palier, laquelle est faite d'un matériau différent que celui de la partie de palier (3) soumise au potentiel positif.

3. Procédé selon la revendication 1 ou 2, **caractérisé en ce que** le même potentiel électrique positif est appliqué à plusieurs parties (3) du palier à rouleaux (2).

4. Procédé selon l'une quelconque des revendications 1 à 3, **caractérisé en ce qu'**un palier rotatif est choisi comme palier à rouleaux (2).

5. Procédé selon l'une quelconque des revendications 1 à 3, **caractérisé en ce qu'**un palier linéaire est choisi comme palier à rouleaux (2).

6. Procédé selon l'une quelconque des revendications 1 à 5, **caractérisé en ce que** le palier à rouleaux (2) est lubrifié avec de l'huile.

7. Procédé selon l'une quelconque des revendications 1 à 5, **caractérisé en ce que** le palier à rouleaux (2) est lubrifié avec de la graisse.
